# EUROPÄISCHE PATENTANMELDUNG

(11) **EP 4 530 337 A1**
(43) Veröffentlichungstag der Anmeldung: **02.04.2025**
(21) Anmeldenummer: 23200870.6
(22) Anmeldetag: 29.09.2023
(51) Int. Cl.: C11D 1/66, C11D 11/00

(54) **VERFAHREN ZUR HERSTELLUNG WASSERFREIER ZUCKERTENSIDGRANULATE**

(71) Anmelder: BASF SE, 67056 Ludwigshafen am Rhein (DE)
(72) Erfinder: MUELHEIMS, Kerstin, 67056 Ludwigshafen am Rhein (DE); HAUS, Johannes Felix, 67063 Ludwigshafen am Rhein (DE); BUSCH, Stefan, 40589 Düsseldorf (DE); KRONBERG, Steffen, 06369 Weissandt-Gölzau (DE)
(74) Vertreter: BASF IP Association

(57) **Zusammenfassung**

Es wird ein neues Verfahren zur Herstellung von wasser- und staubfreien Zuckertensidgranulaten mit hohem Schüttgewicht vorgestellt, bei dem man wässrige Pasten von Alkyl- und/oder Alkenylpolyglykosiden mit einem Feststoffgehalt von 40 - 60 Gew.-% in einem Vakuum-Doppelwalzentrockner bis auf einen Restwassergehalt unterhalb von 2 Gew.-% trocknet.

## Beschreibung

### Gebiet der Erfindung

Die Erfindung betrifft ein Verfahren zur Trocknung von wäßrigen Zuckertensidpasten unter Verwendung eines Vakuum-Doppelwalzentrockners.

### Stand der Technik

Auf Grund des vielerorts gewachsenen ökologischen Bewusstseins, im folgenden Bereich speziell im Transportwesen, will man auch in der Herstellung von kosmetischen und Personal Care - Produkten konzentrierte Lösungen oder wasserfreie Rohstoffe anbieten, die vor der Weiterverarbeitung direkt mit Wasser aufgefüllt werden können.

Durch Verwendung fester Produkte, die lose oder in Karton verpackt werden, strebt man vor allem die Vermeidung von (Plastik)verpackungen an.

Zuckertenside, wie beispielsweise Alkylpolyglycoside (APG - hier gleichbedeutend mit Alkyl- und/oder Alkenylpolyglykosiden), zeichnen sich durch ausgezeichnete Detergenseigenschaften und hohe ökotoxikologische Verträglichkeit aus. Insbesondere in der Kosmetik ist die gute dermatologische Verträglichkeit, die diese Tenside auszeichnet, erforderlich. Des Weiteren ist im Kosmetik-, Home und Personal Care Bereich in der Regel eine ausreichende Wasserlöslichkeit, eine gute Kompatibilität mit möglichst vielen eingesetzten Wirk- und Hilfsstoffen, ein gutes Schaumbildungsvermögen und eine gute Verdickbarkeit erwünscht. Wesentlich ist aber der Bedarf an Tensiden, die aus biogenen Quellen und speziell auch nachwachsenden Rohstoffen hergestellt werden können. Erwünscht sind Tenside, die keine alkoxilierten Gruppen aufweisen und die somit insbesondere den Einsatz von Ethylenoxid zu ihrer Herstellung überflüssig machen.

Diese Vorteile treffen gänzlich auf Alkylpolyglycoside zu. Sie werden überwiegend in flüssigen Formulierungen, wie beispielsweise Geschirrspülmittel oder Haarshampoos eingesetzt, aber zunehmend besteht auch ein Marktbedürfnis nach festen, wasserfreien Anbietungsformen, die sich beispielsweise in Pulverwaschmittel oder Syndetseifen einarbeiten lassen.

Die Trocknung flüssiger Tensidzubereitungen erfolgt großtechnisch in der Regel durch konventionelle Sprühtrocknung, bei der man die wässrige Tensidpaste am Kopf eines Turmes in Form feiner Tröpfchen versprüht, denen heiße Trocknungsgase entgegengeführt werden. Diese Technologie ist auf Zuckertensidpasten jedoch nicht ohne weiteres anwendbar. Das Produkt ergibt bei der Sprühtrocknung eine klebrige, nicht fließfähige Masse, die größtenteils an den Wänden, in den Röhrensystemen und an den Zyklonwänden des Sprühtrockners haften bleibt und letztendlich die Leitungen und Zyklone verstopft. Des Weiteren fließt aus einem derartigen Verfahren stammendes Pulver aufgrund seiner Feinheit nur schlecht aus dem Trockner und verliert bei der Lagerung in Fässern aufgrund von Verbackung seine Fließfähigkeit. Insbesondere bei den Alkylpolyglycosiden jedoch liegen die für die Trocknung erforderlichen Temperaturen oberhalb der Karamelisierungs- d.h. Zersetzungstemperatur der Zuckertenside, so dass bei konventioneller Trocknung von Zuckertensidpasten verkohlte Produkte erhalten werden. Die Anbackungen an der Turmwandung, die in kurzen Abständen eine aufwendige Reinigung erforderlich machen, führen durch die Verkohlung zu schwarz verkohlten Resten, die nicht nur schwer zu reinigen sind, sondern durch Abrieb das entstehende Produkt mit schwarzen Partikeln verunreinigen.

In der DE 41 02 745 A1 wird ein Sprühtrocknungsverfahren offenbart, bei dem man Fettalkoholpasten eine geringe Menge von 1 bis 5 Gew.-% Alkylglucosiden zusetzt und einer konventionellen Sprühtrocknung unterwirft. Möglich ist das nur mit geringen Anteilen an Zuckertensiden und mithilfe von Trägermaterialien, da sich der Prozess nur in Gegenwart einer großen Menge anorganischer Salze durchführen lässt. Höhere Konzentrationen von getrockneten Zuckertensiden enthält man nur durch gemeinsame Verarbeitung mit Hilfsmitteln, wie auch in der deutschen Patentanmeldung DE 41 39 551 A1 beschrieben. Darin wird ein Sprühtrocknungsprozess in Gegenwart von Mischungen aus Soda und Zeolithen vorgestellt, bei dem jedoch Endprodukte mit maximal 50 Gew.-% des Zuckertensids erhalten werden.

Schließlich wird in der Internationalen Patentanmeldung WO 95/14519 dargestellt, Zuckertensidpasten einer Trocknung mit überhitztem Wasserdampf zu unterwerfen; dies ist jedoch technisch sehr aufwendig.

Ein weniger aufwendiges Verfahren, das die Herstellung von qualitativ hochwertigen, praktisch wasserfreien Zuckertensidpulvern bzw. -granulaten gestattet und ohne die Mitverwendung von Trägern während des Trocknungsvorgangs auskommt wird in der deutschen Patentschrift DE 19 534 371 C1 offenbart. Dabei wird ein horizontaler Dünnschichtverdampfer zur Trocknung von Alkylpolyglycosiden und/oder Fettsäure-N-alkylpolyhydroxyalkylamiden eingesetzt, bei dem vom Produkteingang bis zum Produktaustrag ein Temperaturgradient anlegt wird und das zu trocknende Gut im Gegenstrom mit Luft begast wird. Zu Beginn des Trocknungsvorgangs erfährt das zu trocknende Gut eine hohe Temperaturbelastung, die bei diesem Prozess nicht zu vermeiden ist. Auch dieses Verfahren ist technisch recht aufwendig. Der verwendete Trockner ist in der Herstellung sehr teuer, da er eine aufwendige Bauweise erfordert, die im Betrieb für Fehler anfälliger ist.

Demzufolge hat die komplexe Aufgabe der vorliegenden Erfindung darin bestanden, hochkonzentrierte wässrige Alkylpolyglycosid-Zuckertensidpasten ohne Mitverwendung von anorganischen oder organischen Trägern, unter niedriger Temperaturbelastung, mit möglichst geringem technischen Aufwand und geringerem Energieverbrauch in praktisch wasserfreie hochkonzentrierte leicht zu zerkleinernde Trocknungsprodukte zu überführen. Die Trocknungsprodukte sollen sich durch eine akzeptable Farbqualität, eine gute Lagerstabilität, eine gute Redispergierung und im Vergleich zu den Produkten des Stands der Technik durch vergleichbare anwendungstechnische Eigenschaften auszeichnen.

### Beschreibung der Erfindung

Gegenstand der Erfindung ist ein Verfahren zur Herstellung von wasserfreien Zuckertensidgranulaten, bei dem man eine auf mindestens 40°C erhitzte wässrige Paste von Alkyl- und/oder Alkenylpolyglykosiden mit einem Feststoffgehalt von 40 - 60 Gew.% in einem Vakuum-Doppelwalzentrockner mit einer spezifischen Trocknungsleistung von 3 bis 7 kg/m²/h bei einer Walzentemperatur von 100 bis 130 °C trocknet.

Die spezifische Trocknungsleistung für die auf 40 bis 70°C erhitzte konzentrierte Alkylpolyglykosidlösung mit einem Feststoffgehalt von 40 bis 60 Gew. (a) ist dadurch zu erreichen, dass man
den Doppelwalzentrockner mit einer kontinuierlichen Geschwindigkeit mit der wässrigen temperierten pastösen Lösung (a) beschickt, wobei die gegeneinander rotierenden Walzen des Doppelwalzentrockners eine Temperatur von 100 bis 135 °C aufweisen und ein Vakuum von 5 bis 25 mbar Absolutdruck angelegt ist.

Auf diese Weise erhält man ein Trocknungsgut bis zu einem Restwassergehalt unterhalb von 2 Gew.-%, das gut lagerfähig und redispergierbar ist und in seinen anwendungstechnischen Eigenschaften den herkömmlichen Produkten nicht nachsteht.

Der Prozess lässt sich sowohl als Batchprozess als auch als kontinuierlicher Prozess fahren.

Überraschenderweise wurde gefunden, dass sich auch mit einem technisch weniger aufwendigen Vakuum-Doppelwalzentrockner nicht verbackende feste Produkte von Alkylpolyglycosiden durch Trocknung herstellen lassen, ohne dass es zu Produktverfärbungen und Anbacken an den Wandungen kommt. Das Produkt durchläuft eine Temperaturzone, die durch die Temperatur der Walzen vorgegeben wird. Es hat dort eine kurze Verweilzeit, erkaltet nach dem Abschaben der Walzen bei der Innenraumtemperatur des Trockners, die sich aus der Walzen- und Manteltemperatur ergibt und weiter nach der Entnahme des getrockneten Gutes aus dem Trockner. Bei diesem Trocknungsverfahren ist die Temperaturbelastung des Produktes wesentlich geringer als bei den Verfahren des Standes der Technik. Außerdem ist das Verfahren ohne die Einstellung eines Temperaturgradienten mit einer aufwendigen Kühlung weniger energieaufwendig. Man erhält ein leicht zu zerkleinerndes Trocknungsprodukt mit einem geringen Restfeuchtegehalt.

Unter geringer Restfeuchte wird ein Wassergehalt von maximal 2 Gew. %, bevorzugt maximal 1,5 Gew. % und insbesondere maximal 1 Gew. % bezogen auf das getrocknete Produkt verstanden.

Die Schaumbildung im zuführenden Flüssigkeitsbad über den Walzen eines Vakuumdoppelwalzentrockners vor dem und während des Eintragens des Gutes auf den Walzenzwischenraum führt oft zu Problemen bei der Verwendung von Vakuumwalzentrocknern. Sie verhindert durch die Blasenbildung eine effektive Trocknung, da kein geschlossener feuchter Film auf den Walzen gebildet wird, der durch Wasserentzug über Temperatur und Vakuum ein gleichmäßiges getrocknetes Produkt ergibt.

Insbesondere bei Produkten mit hoher Viskosität können gebildete Luftblasen im Schaum nicht mehr entweichen, so dass die Verwendung von Vakuumdoppelwalzentrocknern bisher nur zur Trocknung dünnerflüssiger Güter verwendet wurde.

Überraschenderweise ermöglicht das erfindungsgemäße Verfahren pastöse Alkylpolyglycoside mit einem robusten, einfach aufgebauten Vakuumtrockner ohne hohen Energieaufwand in praktisch wasser- und staubfreie, hochkonzentrierte, leicht zu zerkleinernde und gut redispergierbare Trocknungsprodukte zu überführen. Je nach Trocknergröße kann das erfindungsgemäße Verfahren eine trockene, feste Form von APG in weniger als 1 Minute von anfänglichem Kontakt mit der Walze bereitstellen. Die Temperaturbelastung des zu trocknenden Gutes liegt daher nur für einen sehr kurzen Zeitraum bei maximal 130°C vorgegeben durch die Walzentemperatur und ist somit wesentlich geringer als bei den Verfahren des Standes der Technik.

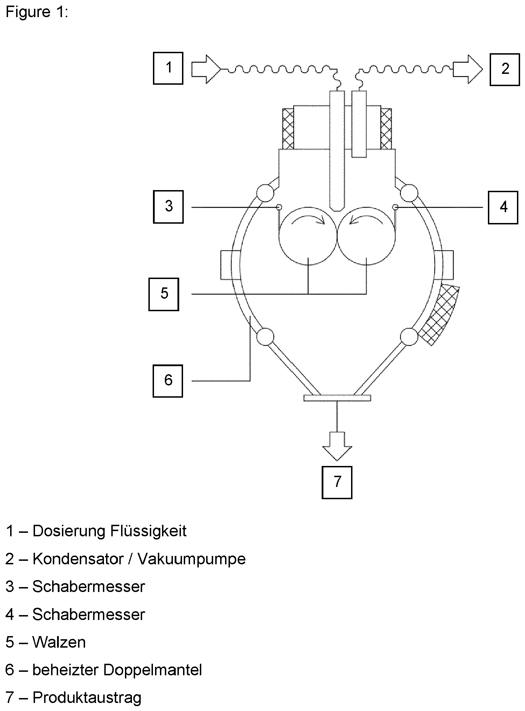

Der Vakuum-Doppelwalzentrockner (siehe Figure 1) ist eine Unterform des Vakuumkontakttrockners. Er verfügt über ein Paar rotierende Hohlwalzen, deren Oberflächen von einem Messer abgeschabt werden. Üblicherweise wird bei der Verwendung des Doppelwalzentrockners ein Flüssigkeitsbad in dem Raum zwischen den zwei rotierenden Walzen durch Zuführung gehalten. Die Zuführungslösung wird vor dem Auftragen auf den Walzspalt zwischen den rotierenden Trommeln auf eine Temperatur gebracht, die eine optimale Viskosität gewährt. Neben dieser eingestellten Temperatur der zugeführten pastösen APG-Masse und ihrer Viskosität wird der Trocknungs- resp. Wasserverdunstungsvorgang der dünnen Schicht auf den Walzen von der Walzentemperatur des Trockners sowie dem angelegten Vakuum bestimmt.

Grundlegend lässt sich das Verfahren in drei Teilbereiche unterteilen: die Zuführung des zu trocknenden Gutes, die Trocknung des Gutes und die Ablösung/Gewinnung des getrockneten Gutes.

### (1) Zuführung des zu trocknenden Guts

### Temperatur und Konzentration der pastösen APG-lösung

Die pastöse Alkylpolyglycosidmasse wird vor der Zuführung auf eine Temperatur von 40 °C bis 70°C bevorzugt 50°C bis 55°C erhitzt. Der Feststoffgehalt der auf den Walzentrockner zu beladenden, APG-enthaltenden Lösung sollte zwischen 40 und 60 Gew. %, besonders bevorzugt 50 bis 55 Gew. % liegen. Der Feststoffgehalt entspricht dem Trockenrückstand (bestimmt durch die Trockenrückstandswaage). Die wasserfreie Alkylpolyglycosidmasse enthält neben dem reinen APG herstellungsbedingt Nebenprodukte wie beispielsweise Salze oder Polydextrose. Es ist möglich geringer konzentrierte Lösungen der Zuckertenside zu trocknen. Für einen höheren Durchsatz wird der Trocknungsvorgang jedoch effektiver und das Verfahren wirtschaftlicher, wenn der Feststoffgehalt des zugeführten Gutes mindestens über 35 Gew. % liegt. Die obere Grenze des Feststoffgehalts ergibt sich durch die Verarbeitbarkeit der Masse - insbesondere der Pumpfähigkeit, die gegeben sein muss.

### Fördermenge und spezifische Trocknungsleistung

Die Walzen bewegen sich gegenläufig und ein Teil der pastös-flüssigen, erhitzten APG-Zubereitung wird über den Walzenspalt auf die Walzenoberfläche aufgebracht, wo sie zum Sieden kommt. Beim weiteren Drehen verdampft der dünne Film des Wassers in den Dampfabzug und es bleibt ein fester Film zurück, der von den sich drehenden Walzenoberflächen mittels scharfer Messer abgeschabt wird.

Die Fördermenge des zu trocknenden Gutes ist abzustimmen mit der Größe und Geschwindigkeit der Walzen, der Spaltbreite und der Vakuumleistung, da diese Parameter das Aufnehmen und Abtransportieren des zugeführten zu trocknenden Gutes bestimmen.

Sie lässt sich aus der spezifischen Trocknungsleistung errechnen. Für den optimierten Prozess der vorliegenden Erfindung ist die spezifische Trocknungsleistung 3 bis 7 kg/m²/h, vorzugsweise 3,3 bis 5,5 kg/m²/h, und insbesondere 3,5 bis 4,5 kg/m²/h, wobei die Einheit zu lesen ist als
kg der zu trocknenden wässrigen Paste von Alkyl- und/oder Alkenylpolyglykosiden mit einem Feststoffgehalt von 40 - 60 Gew.% pro Quadratmeter der für die Trocknung zur Verfügung stehenden Walzenfläche pro Stunde.

Die spezifische Trocknungsleistung wird angegeben pro m² Walzenfläche des Trockners und ist ein spezifischer Wert für das entsprechende Trocknungsgut in Abhängigkeit von den eingestellten Verfahrensparametern.

### Spaltbreite

Die eingestellte Spaltbreite zwischen den Doppelwalzen bestimmt die Schichtdicke des Trocknungsgutes auf den Walzen.

Diese ist wesentlich für die Trocknung, da das Abdampfen des Wassers auf dem Weg vom Auftragen des Gutes auf die Walzen bis zum Abschaben des getrockneten Gutes, also in weniger als einer Walzenumdrehung, stattfinden muss. Die Schicht muss ausreichend dünn sein, damit die Temperatur der Walzen die aufgetragene Schicht sowohl an der Unter- wie an der Oberseite schnell erreicht und in Verdampfungsenergie umgewandelt werden kann.

Andererseits darf die Schicht nicht zu dünn sein, denn sie muss einen geschlossenen Film ergeben, um eine gleichmäßige Trocknung des Produktes zu gewährleisten, Energieverluste zu vermeiden und den Durchsatz resp. die Trocknungsleistung zu optimieren.

Im vorliegenden Verfahren beträgt der Abstand der Walzen 0,05 bis 5 mm, vorzugsweise 0,06 bis 1,0 mm, besonders bevorzugt 0,08 bis 0,5 mm, insbesondere 0,1 bis 0,3 mm.

### (2) Trocknung

### Druck (Absolutdruck, Vakuum)

Vakuumkontakttrockner haben den Nachteil, dass das zu trocknende Gut aufgrund des angelegten Unterdrucks häufig zu schäumen beginnt. Dieses ist abhängig von den Inhaltsstoffen des Gutes, aber besonders auch von der Viskosität der zu trocknenden Lösung. Hochviskose Lösungen entwickeln dabei einen stabileren Schaum und entlassen die eingeschlossenen Luftblasen nur langsam, so dass diese noch beim Auftragen auf die Walzen im Film vorliegen oder gerade entweichen und so zu einem unregelmäßigen Film führen. Überraschenderweise war es jedoch dennoch möglich für die hochviskosen pastösen Alkylpolyglycosid-Lösungen einen Vakuum-Doppelwalzentrockner zu verwenden und einen gleichmäßigen Film auf den Walzen zu erzeugen. Die Schaumentwicklung lässt sich durch die Einstellung eines niedrigeren Vakuums vermindern. Dennoch trägt wiederum ein höheres Vakuum dazu bei, die Verdunstung des Wassers zu beschleunigen und damit die Temperatur für die Trocknung und entsprechende Temperaturbelastung für das zu trocknende Gut gering zu halten.

Das erfindungsgemäße Verfahren wird bei einem Absolutdruck von 5 bis 30 mbar durchgeführt. Werden keine Eingriffe in das System wie Änderung der Dosierung des zu trocknenden Gutes, Entnahme des getrockneten Gutes und kurzzeitiges Öffnen eines geschlossenen Trocknungssystems durchgeführt wird vorzugsweise ein Absolutdruck von 15 ± 5 mbar, besonders bevorzugt 15 ± 3 mbar gehalten.

### Walzenumdrehungszahl

Die Walzenumdrehungszahl bestimmt die Verweilzeit des zu trocknenden Gutes vom Auftragen auf die Walze bis zum Abschaben des getrockneten Filmes und ist in erster Linie von der gewählten Walzentemperatur abhängig. Die Verweilzeit sollte im Hinblick auf die Temperaturbelastung möglichst kurz sein, jedoch lange genug, um die angestrebte Restfeuchte zu erreichen. Beim erfindungsgemäßen Verfahren beträgt die Walzenumdrehungszahl 1 bis 6 Umdrehungen pro Minute, vorzugsweise 2 bis 5 U/min und besonders bevorzugt 3 bis 5 U/min.

### Walzentemperatur

Die gewählte Walzentemperatur ist der wichtigste Parameter für den erfolgreichen Trocknungsprozess der Zuckertensidlösung. Die angelegte Walzentemperatur eines Kontakttrockners bewirkt eine direkte Trocknung durch Temperaturübertragung auf das aufliegende Gut. Wesentlich ist es dabei, dass die über die Walze eingetragene Wärme nur zur Verdampfung des Wassers zur Verfügung steht und nicht zur übermäßigen Erhitzung des Trocknungsguts führen sollte. Die Trocknung des Gutes muss also genau zum Zeitpunkt der Ablösung der getrockneten Schicht ('Gardine') von der Walze beendet sein, um einerseits ein klebriges Produkt (zu kurze Trocknung) mit zu hoher Restfeuchte und anderseits eine Verfärbung durch zu hohe Temperaturbelastung bei zu langer Trocknung zu vermeiden. Überraschenderweise war die Schaumbildung während der Dosierung stark von der Walzentemperatur abhängig, vorteilhaft war dabei die höhere Walzentemperatur.

Im erfindungsgemäßen Verfahren wird mit einer Walzentemperatur von 100 bis 135 °C, vorzugsweise 105 bis 120 °C und besonders bevorzugt 112 ± 4 °C gearbeitet.

Höhere Temperaturen bewirken eine Verhärtung des Materials, so dass der Aufwand einer gleichmäßigen Zerkleinerung steigt. Steigert man die Temperatur weiter, wird ein teilweise verkohltes Produkt erhalten.

Die einzustellende Manteltemperatur des Trockners hat nur geringen Einfluss auf den Trocknungsverlauf. Die Erwärmung des Trocknermantels dient lediglich der Vermeidung der Kondensation des vom Trocknungsgut abgezogenen Wassers an den kühleren Innenwänden des Trockners, so dass die Manteltemperatur bei 40 - 80 °C, bevorzugt 50 ± 5 °C liegen sollte.

Optimale Parameter für das Trocknungsverfahren sind daher:
- Eintrittstemperatur = 40 - 60 °C (Temp. Der in den Spalt eingeführten APG-Masse)
- Absolutdruck = 5 - 30 mbar
- Walzentemperatur = 100 - 135 °C
- Spaltbreite der Walzen = 0,05 - 5 mm
- Manteltemperatur = 40 - 80 °C
- Walzenumdrehung = 1 - 6 U/min

Somit ist ein Gegenstand der Erfindung ein
Verfahren zur Trocknung zur Herstellung wasserfreier Zuckertensidgranulate, bei dem man
a) eine konzentrierte Alkylpolyglykosid-Lösung mit einem Feststoffgehalt von 40 bis 60 Gew. % auf 40 - 60 °C erhitzt und
b) den Doppelwalzentrockner mit einer kontinuierlichen Geschwindigkeit mit der wässrigen temperierten pastösen Lösung aus a) beschickt, wobei die gegeneinander rotierenden Walzen des Doppelwalzentrockners mit einer Spaltbreite von 0,05 bis 5 mm eine Temperatur von 100 bis 135 °C aufweisen und die Manteltemperatur des Trockners bei 40 - 80 °C liegt
c) und ein Vakuum von 5 bis 25 mbar Absolutdruck angelegt ist.

Bevorzugt ist das Verfahren mit den Prozessparametern:
- Eintrittstemperatur = 50 - 55 °C (Temp. Der in den Spalt eingeführten APG-Masse)
- Absolutdruck = 15 ± 5 mbar
- Walzentemperatur = 105 - 120 °C
- Spaltbreite der Walzen = 0,06 -1,0 mm
- Manteltemperatur = 50 ± 5 °C
- Walzenumdrehung = 2 - 5 U/min - Geschwindigkeit!!! m/s

Besonders bevorzugt ist das Verfahren mit den Prozessparametern:
- Eintrittstemperatur = 50 - 55 °C (Temp. Der in den Spalt eingeführten APG-Masse)
- Absolutdruck = 15 ± 5 mbar
- Walzentemperatur = 105 - 120 °C
- Spaltbreite der Walzen = 0,08 -0,5 mm
- Manteltemperatur = 50 ± 5 °C
- Walzenumdrehung = 3 - 5 U/min

Speziell bevorzugt ist das Verfahren mit den Prozessparametern:
- Eintrittstemperatur = 50 - 55 °C (Temp. Der in den Spalt eingeführten APG-Masse)
- Absolutdruck = 15 ± 3 mbar
- Walzentemperatur = 112 ± 4 °C
- Spaltbreite der Walzen = 0,1 -0,3 mm
- Manteltemperatur = 50 ± 5 °C
- Walzenumdrehung = 3 - 5 U/min

### (3) Ablösung des getrockneten Guts und ggf. Nachbehandlung

Bei Ablösung der getrockneten Masse von den Walzen darf das Trocknungsgut nicht zu heiß sein, um ein Verkleben (Kompaktieren) der abgelösten Schicht zu vermeiden. Die Temperatur des abgeschabten Gutes sinkt bereits nach dem Abschaben des Gutes im Trocknerraum und weiter nach Entnahme aus dem Trockner. Das Material wird nach dem Abschaben von den Walzen gesammelt. Dieses geschieht im kontinuierlichen Betrieb des Trockners in einer Schleuse oder beim Batchprozess in einem Behälter im Innenraum des Trockners. Mit einer Restfeuchte von unterhalb 2 Gew. %, bevorzugt unterhalb 1,5 Gew. %, besonders bevorzugt maximal 1 Gew. % wird das getrocknete Gut entnommen und gegebenenfalls zur Verbesserung der Fließfähigkeit gemahlen.

Des Weiteren kann ein Fließhilfsmittel wie Siliziumdioxid zugegeben werden. Weitere inerte fließregulierende Zusatzstoffe beinhalten beliebige Formen von Siliziumdioxid, darunter pyrogene Kieselsäuren, Fällungskieselsäuren, Aluminiumsilicate, Magnesiumsilicate usw., Zeolithe, Bentonite, Montmorillionite und Attapulgite sowie deren Mischungen. Das Gewicht des gegebenenfalls zugesetzten fließregulierenden Inertstoffs beträgt relativ zum Gewicht der Zuckertensidgesamtzusammensetzung ungefähr 0,2 : 100 bis ungefähr 3 : 100, besonders bevorzugt ungefähr 2 : 100.

### Alkyl- und/oder Alkenylpolyglykoside

Alkyl- und Alkenylpolyglykoside - in der Literatur teilweise auch als Alkyl- und/oder Alkenyloligoglykoside benannt - sind bekannte nichtionische Tenside, die der Formel **(I)** folgen,

**R¹O-[G]**ₚ **(I)**

in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht. Sie können nach den einschlägigen Verfahren der präparativen organischen Chemie erhalten werden. Stellvertretend für das umfangreiche Schrifttum sei hierauf die Schriften EP-A1-0 301 298 und WO 90/03977 verwiesen.

Die Alkyl- und/oder Alkenylpolyglykoside können sich von Aldosen bzw. Ketosen mit 5 oder 6 Kohlenstoffatomen, vorzugsweise der Glucose ableiten. Die bevorzugten Alkyl- und/oder Alkenylpoly-glykoside sind somit Alkyl- und/oder Alkenylpolyglucoside. Die Indexzahl p in der allgemeinen Formel **(I)** gibt den Oligomerisierungsgrad (DP- degree of polymerization), d. h. die Verteilung von Mono- und Polyglykosiden an und steht für eine Zahl zwischen 1 und 10. Während p in einer gegebenen Verbindung stets ganzzahlig sein muss und hier vor allem die Werte p = 1 bis 6 annehmen kann, ist der Wert p für ein bestimmtes Alkylpolyglykosid eine analytisch ermittelte
rechnerische Größe, die meistens eine gebrochene Zahl darstellt. Vorzugsweise werden Alkyl- und/oder Alkenylpolyglykoside mit einem mittleren Oligomerisierungsgrad p von 1,1 bis 3,0 eingesetzt. Aus anwendungstechnischer Sicht sind solche Alkyl- und/oder Alkenylpolyglykoside bevorzugt, deren Oligomerisierungsgrad kleiner als 2 ist und insbesondere zwischen 1,2 und 1,8 liegt.

Der Alkyl- bzw. Alkenylrest R¹ kann sich von primären Alkoholen mit 6 bis 18, vorzugsweise 8 bis 14 Kohlenstoffatomen ableiten. Typische Beispiele sind 1-Octanol, 1-Decanol, 1-Dodecanol, 1-Tetradecanol, 1-Hexadecanol, 1-Octadecanol, Palmoleylalkohol, Oleylalkohol, Isostearylalkohol sowie deren technische Gemische, wie sie beispielsweise bei der Hydrierung von technischen Fettsäuremethylestern oder im Verlauf der Hydrierung von Aldehyden aus der Roelen'schen Oxosynthese erhalten werden. Bevorzugt sind Alkylpolyglucoside der Kettenlänge C_{8/10} (DP = 1 bis 3, bevorzugt 1,2 - 1,8), vorzugsweise hergestellt aus dem als Vorlauf der destillativen Auftrennung von technischem C_{8/18}-Kokosfettalkohol anfallenden Alkoholgemisch, Alkylpolyglucoside der Kettenlänge C_{12/14} (DP = 1 bis 3 bevorzugt 1,2 - 1,8) vorzugsweise auf Basis von gehärtetem C_{12/14}-Kokosalkohol sowie Alkylpolyglucoside auf Basis technischer C_{9/11}-Oxoalkohole (DP = 1 bis 3), Alkylpolyglucoside der Kettenlänge C₁₂₋₁₈ (DP = 1 bis 3 bevorzugt 1,2 - 1,8).

### Gewerbliche Anwendbarkeit

Die nach dem erfindungsgemäßen Verfahren erhältlichen Feststoffe können anschließend mit weiteren Inhaltsstoffen von pulverförmigen oberflächenaktiven Mitteln, wie beispielsweise Turmpulvern für Waschmittel abgemischt werden. Im Bereich der Personal Care Produkte lassen sich die Trocknungsprodukte direkt in feste Seifen- und Syndetstücke einarbeiten, die durch Extrusion oder Schmelzverfahren hergestellt werden können. Es ist ferner problemlos möglich, die Pulver in wässrige Zubereitungen einzuarbeiten. Alternativ können die Trocknungsprodukte direkt vor der Einarbeitung in Reinigungs- oder kosmetische Formulierungen leicht in Wasser redispergiert werden, die Trocknung erfolgt somit um den Transport des Rohmaterials hinsichtlich Raumbedarf und Energieaufwand zu verbessern. Tatsächlich werden bei Verwendung der Pulver gegenüber den wässrigen Ausgangspasten keine Unterschiede in den anwendungstechnischen Eigenschaften beobachtet. Auch in Syndet-seifenrezepturen lassen sich die Granulate beispielsweise zusammen mit Fettsäuren, Fettsäuresalzen, Stärke, Polyglycolen und dergleichen ohne weiteres einarbeiten.

### Beispiele

### Versuch 1: Labortrockner mit einer Trocknungsfläche von 0,22 m²

Erste Untersuchungen zur Trocknung einer Zuckertensid-Lösung mit einem Feststoffgehalt von 53 % wurden in einem handelsüblichen Vakuum-Doppelwalzentrockner der Firma IPT Pergande GmbH (06369 Südliches-Anhalt, OT Weißandt Gölzau) in Laborgröße (Trocknungsfläche 0,22 m²) durchgeführt.

### Einsatzstoff:

Plantacare 1200 UP (BASF) - INCI: Lauryl Glucoside, eine trübe, hochviskose wäßrige Lösung von C₁₂-C₁₆ Fettalkohol-Polyglycosiden mit einem Trockenrückstand von 53,0 Gew.%.

Das zu trocknende Gut wurde auf eine Temperatur von 50°C vorgewärmt und über eine gravimetrische Zuführung mit Ventilsteuerung in den Spalt zwischen den rotierenden Walzen dosiert. Das angelegte Vakuum im Trockner betrug 15 mbar Absolutdruck. Es wurde das Trocknungsverhalten der Alkylpolyglycosidpaste bei unterschiedlichen Eintragsmengen, Walzenumdrehungen und Walzentemperaturen bei 75 °C oder 120°C überprüft. Der feste Film wurde von den Walzen durch Klingen abgeschabt und gesammelt. Die erhaltenen dünnen Platten des getrockneten Feststoffs ließen sich leicht zu einem fließfähigen Pulver mit einem Feuchtigkeitsgehalt von maximal 2,0 Gew.% - bei höherer Walzentemperatur maximal 1 Gew.% - zerkleinern.

### Prozessparameter:

| Variablen | |
|---|---|
| p= | Absolutdruck |
| T_{W}= | Walzentemperatur |
| T_{M}= | Manteltemperatur |
| T_{Slurr y}= | Eingangstemperatur, flüssig |
| U= | Walzenumdrehung |
| RF= | Restfeuchtegehalt |

### Versuche 1.1 bis 1.3 - mit einer Walzentemperatur von 75°C

### Versuche 1.1 und 1.2 - Walzentemperatur von 75 °C

| V1 | | | Parameter | | |
|---|---|---|---|---|---|
| Prozessdauer (h): | 5,5 | h | p= | 15 | mbar |
| | | | T_{W}= | 75 | °C |
| Feststoffgehalt: | 53% | | T_{M}= | 50 | °C |
| getrocknete Menge: | 1300 | g | T_{Slurry}= | 50 | °C |
| | | | U= | 1,7 | U/min |
| Prozessdauer: | 330 | min | RF= | 1,4 | % |
| Eindüsungsmenge: | 2453 | g | | | |
| Eindüsungsleistung Slurry: | 7,4 | g/min | | | |
| Eindüsungsleistung Slurry: | 0,45 | kg/h | | | |
| **Produktaustrag:** | **0,24** | **kg/h** | | | |
| Tagesleistung [6h]: | 1,42 | kg | | | |

| V2 | | | Parameter | | |
|---|---|---|---|---|---|
| Prozessdauer: | 3 | h | p= | 15 | mbar |
| | | | T_{W}= | 75 | °C |
| Feststoffgehalt: | 53% | | T_{M}= | 50 | °C |
| getrocknete Menge: | 840 | g | T_{Slurry}= | 50 | °C |
| | | | U= | 1,7 | U/min |
| Gesamt: | 180 | min | RF= | 1,4 | % |
| Eindüsungsmenge: | 1585 | g | | | |
| Eindüsungsleistung Slurry: | 8,8 | g/min | | | |
| Eindüsungsleistung Slurry: | 0,53 | kg/h | | | |
| **Produktaustrag:** | **0,28** | **kg/h** | | | |
| Tagesleistung [6h]: | 1,68 | kg | | | |

### Versuch 1.3 - erhöhte Eindüsungsleistung und Walzenumdrehung

| V3 | | | Parameter | | |
|---|---|---|---|---|---|
| Prozessdauer: | 1 | h | p= | 15 | mbar |
| | | | Tw= | 75 | °C |
| Feststoffgehalt: | 53% | | Tm= | 50 | °C |
| getrocknete Menge: | 396 | g | Tflüß= | 50 | °C |
| | | | U= | 3,4 | U/min |
| Gesamt: | 60 | min | RF= | 1,4 | % |
| Eindüsungsmenge: | 747 | g | | | |
| Eindüsungsleistung Slurry: | 12,5 | g/min | | | |
| Eindüsungsleistung Slurry: | 0,75 | kg/h | | | |
| **Produktaustrag:** | **0,40** | **kg/h** | | | |
| Tagesleistung [6h]: | 2,38 | kg | | | |

### Versuche 1.4 bis 1.6 - mit einer Walzentemperatur von 120°C

### Versuch 1.4

| V4 | | | Parameter | | |
|---|---|---|---|---|---|
| Prozessdauer: | 0,75 | h | p= | 15 | mbar |
| | | | T_{W}= | 120 | °C |
| Feststoffgehalt: | 53% | | T_{M}= | 50 | °C |
| getrocknete Menge: | 360 | g | T_{Slurry}= | 50 | °C |
| | | | U= | 4,0 | U/min |
| Gesamt: | 45 | min | RF= | 0,9 | % |
| Eindüsungsmenge: | 679 | g | | | |
| Eindüsungsleistung Slurry: | 15,1 | g/min | | | |
| Eindüsungsleistung Slurry: | 0,91 | kg/h | | | |
| Produktaustrag: | 0,48 | kg/h | | | |
| Tagesleistung [6h]: | 2,88 | kg | | | |

### Versuch 1.5:

| V5 | | | Parameter | | |
|---|---|---|---|---|---|
| Prozessdauer: | 6,83 | h | p= | 15 | mbar |
| | | | T_{w}= | 120 | °C |
| Feststoffgehalt: | 53% | | T_{M}= | 50 | °C |
| getrocknete Menge: | 2500 | g | T_{Slurry}= | 50 | °C |
| | | | U= | 4,0 | U/min |
| Gesamt: | 410 | min | RF= | 1 | % |
| Eindüsungsmenge: | 4717 | g | | | |
| Eindüsungsleistung Slurry: | 11,5 | g/min | | | |
| Eindüsungsleistung Slurry: | 0,69 | kg/h | | | |
| Produktaustrag: | 0,37 | kg/h | | | |
| Tagesleistung [6h]: | 2,20 | kg | | | |

### Versuch 1.6:

| V6 | | | Parameter | | |
|---|---|---|---|---|---|
| Prozessdauer: | 6,75 | h | p= | 15 | mbar |
| | | | T_{W}= | 120 | °C |
| Feststoffgehalt: | 53% | | T_{M}= | 50 | °C |
| getrocknete Menge: | 2591 | g | T_{Slurry}= | 50 | °C |
| | | | U= | 4,0 | U/min |
| Gesamt: | 405 | min | RF= | 1 | % |
| Eindüsungsmenge: | 4889 | g | | | |
| Eindüsungsleistung Slurry: | 12,1 | g/min | | | |
| Eindüsungsleistung Slurry: | 0,72 | kg/h | | | |
| Produktaustrag: | 0,38 | kg/h | | | |
| Tagesleistung [6h]: | 2,30 | kg | | | |

▪ Die Versuche 1.1 bis 1.6 zeigten, dass entgegen der Erfahrungen mit üblichen Trocknungsmethoden eine temperaturschonende und kontinuierliche Trocknung auch von hochkonzentrierten viskosen Zuckertensidlösungen mit Hilfe des Vakuum-Doppelwalzentrockners möglich ist. Überraschenderweise war die Schaumbildung während der Dosierung stark von der Walzentemperatur abhängig, vorteilhaft war dabei die höhere Walzentemperatur. Die höhere Walzentemperatur ermöglichte auch die Erhöhung der Walzendrehzahl und diese wiederum eine signifikante Erhöhung der Eindüsungsrate (Vergleich V5 -> V9 ∥ 0,28 kg/h -> 0,48 kg/h).

Sehr gute Ergebnisse mit einem hohen Produktdurchsatz wurden in den Versuchen 1.4 bis 1.6 durch eine Vortemperierung des Gutes auf 50 °C und eine Walzentemperatur von 120 °C erreicht. Bei dieser Walzentemperatur wurde ein Restfeuchtegehalt von ≤ 1 Gew.% durch die geeignete Parametereinstellung erreicht.

### Versuch 2: Vakuum-Doppelwalzentrockner mit einer Trocknungsfläche von 0,40 m²

Zur Erhöhung des Durchsatzes wurden weitere Versuche zur Trocknung einer Zuckertensid-Lösung mit einem Feststoffgehalt von 53 % in einem handelsüblichen Vakuum-Doppelwalzentrockner der Firma IPT Pergande GmbH (06369 Südliches-Anhalt, OT Weißandt Gölzau) mit einer Walzenfläche von 0,40 m² und folgenden Trocknerkennzeichen durchgeführt:

### Parameter des Trockners

| | |
|---|---|
| Walzenfläche (gesamt) | 0,56 m² |
| Walzenfläche (ca. netto) | 0,40 m² |
| Walzenlänge | 0,37 m |
| Walzendurchmesser | 0,24 m |
| Mögliche max. Walzentemp. | 160 °C (in Abhängigkeit der Leistung des Thermostaten) |
| Spaltbreite zwischen den Walzen | 0,1 mm bis 0,3 mm |
| Druckbereich | 10 mbar - Umgebungsdruck |
| Drehzahl | 0,5 UPM bis 3,0 UPM |

### Einsatzstoff:

Plantacare 1200 UP (BASF) - INCI: Lauryl Glucoside, eine trübe, hochviskose wässrige Lösung von C12-C16 Fettalkohol-Polyglycosiden mit einem Trockenrückstand von 53,0 Gew. %.

| Parameter | Einheit | 2.1 | 2.2 | 2.3 | 2.4 |
|---|---|---|---|---|---|
| | | | | | |
| Druck | [mbar] | 15 | 30 | 45 | 60 |
| Walzentemperatur | [°C] | 120 | 120 | 120 | 120 |
| | | | | | |
| Dauer | [min] | 28 | 25 | 30 | 26 |
| Endmasse | [g] | 700 | 470 | 417 | 322 |
| **Durchsatz** | **[kg/h]** | **1,5** | **1,1** | **0,8** | **0,7** |

Die Versuchsreihen 2.1, 2.2, 2.3 und 2.4 wurden zur Ermittlung des optimalen Druckbereichs auf einem größeren Doppelwalzentrockner durchgeführt.

Das Ergebnis zeigt eine deutliche Abhängigkeit zwischen der Druckstufe und der erzielten Trocknungsleistung.

Optisch konnte festgestellt werden, dass bei höherem Druck (geringeres Vakuum) die Kontinuität einer durchgehenden Produktschicht auf den Walzen abnimmt, d.h. eine geringere Produktbenetzung vorlag. Dadurch ergab sich auch die geringere Trocknungsleistung.

### Versuche zur Verweilzeit des Produktes - Einfluss der Walzentemperatur und -drehzahl

Eine Veränderung der Walzendrehzahl hat einen merklichen Einfluss auf die Produktqualität, d.h. bei einer zu langen Temperaturbelastung - bestimmt durch Walzentemperatur und Verweilzeit - geht das Produkt in eine Schmelze über.

| Versuch 2.5 | | | Parameter | | |
|---|---|---|---|---|---|
| Prozessdauer: | 3 | h | p= | 15 | mbar |
| | | | T_{W}= | 120 | °C |
| Feststoffgehalt: | 53% | | T_{M}= | 50 | °C |
| getrocknete Menge: | 3200 | g | T_{Slurry}= | 50 | °C |
| | | | U= | 3,0 | U/min |
| Prozessdauer: | 180 | min | RF= | 0,1 | % |
| Eindüsungsmenge: | 6038 | g | | | |
| Eindüsungsleistung Slurry: | 33,5 | g/min | | | |
| Eindüsungsleistung Slurry: | 2,01 | kg/h | | | |
| **Produktaustrag:** | **1,07** | **kg/h** | | | |
| Tagesleistung [6h]: | 6,40 | kg | | | |

| Versuch 2.6 | | | Parameter | | |
|---|---|---|---|---|---|
| Prozessdauer: | 5 h 30 min | h, min | p= | 15 | mbar |
| | | | Tw= | 120 | °C |
| Feststoffgehalt: | 53% | | T_{M}= | 50 | °C |
| getrocknete Menge: | 5848 | g | T_{Slurry}= | 50 | °C |
| | | | U= | 3,0 | U/min |
| Prozessdauer: | 330 | min | RF= | 0,3 | % |
| Eindüsungsmenge: | 11034 | g | | | |
| Eindüsungsleistung Slurry: | 33,4 | g/min | | | |
| Eindüsungsleistung Slurry: | 2,01 | kg/h | | | |
| **Produktaustrag:** | **1,06** | **kg/h** | | | |
| Tagesleistung [6h]: | 6,38 | kg | | | |

Die ersten getrockneten Produkte (Versuche 2.5 und 2.6) wiesen ein glasiges, sehr festes Material auf, das einer Schmelze ähnelte. Die hohe Festigkeit führte ebenfalls dazu, dass das Produkt mit höherem Energieaufwand vermahlen werden musste. Bei der Reduktion der Walzentemperatur von 120 °C auf 112 °C konnte die Produktqualität deutlich verbessert werden.

Die Formation der Schmelze wurde in der ersten Versuchsreihe bei 120 °C nicht beobachtet, da die höhere Drehzahl (4,0 U/min statt 3,0 U/min) in den Versuchen 1.4 bis 1.6 zu einer geringeren Verweilzeit des Materials auf der Walze von ungefähr 14 s führte.

| Versuch 2.7 | | | Parameter | | |
|---|---|---|---|---|---|
| Prozessdauer: | 2 h 20 min | h, min | p= | 15 | mbar |
| | | | Tw= | 112 | °C |
| Feststoffgehalt: | 53% | | T_{M}= | 50 | °C |
| getrocknete Menge: | 2609 | g | T_{Slurry}= | 50 | °C |
| | | | U= | 3,0 | U/mi n |
| Prozessdauer: | 140 | min | RF= | 0,2 | % |
| Eindüsungsmenge: | 4923 | g | | | |
| Eindüsungsleistung Slurry: | 35,2 | g/min | | | |
| Eindüsungsleistung Slurry: | 2,11 | kg/h | | | |
| **Produktaustrag:** | **1,12** | **kg/h** | | | |
| Tagesleistung [6h]: | 6,71 | kg | | | |

| Versuch 2.8 | | | Parameter | | |
|---|---|---|---|---|---|
| Prozessdauer: | 4 h 15 min | h, min | p= | 15 | mbar |
| | | | T_{W}= | 112 | °C |
| Feststoffgehalt: | 53% | | T_{M}= | 50 | °C |
| getrocknete Menge: | 4520 | g | T_{Slurry}= | 50 | °C |
| | | | U= | 3,0 | U/min |
| Prozessdauer: | 255 | min | RF= | 0,3 | % |
| Eindüsungsmenge: | 8528 | g | | | |
| Eindüsungsleistung Slurry: | 33,4 | g/min | | | |
| Eindüsungsleistung Slurry: | 2,01 | kg/h | | | |
| **Produktaustrag:** | **1,06** | **kg/h** | | | |
| Tagesleistung [6h]: | 6,38 | kg | | | |

| 2.9 | | | Parameter | | |
|---|---|---|---|---|---|
| Prozessdauer: | 5 h 50 min | h, min | p= | 15 | mbar |
| Prozessdauer: | | | T_{W}= | 112 | °C |
| Feststoffgehalt: | 53% | | T_{M}= | 50 | °C |
| getrocknete Menge: | 6400 | g | T_{Slurry}= | 50 | °C |
| | | | U= | 3,0 | U/min |
| Prozessdauer: | 350 | min | RF= | 0,3 | % |
| Eindüsungsmenge: | 12075 | g | | | |
| Eindüsungsleistung Slurry: | 34,5 | g/min | | | |
| Eindüsungsleistung Slurry: | 2,07 | kg/h | | | |
| **Produktaustrag:** | **1,10** | **kg/h** | | | |
| Tagesleistung [6h]: | 6,58 | kg | | | |

| 2.10 | | | Parameter | | |
|---|---|---|---|---|---|
| Prozessdauer: | 3 h 40 min | h, min | p= | 15 | mbar |
| Prozessdauer: | | | T_{W}= | 112 | °C |
| Feststoffgehalt: | 53% | | T_{M}= | 50 | °C |
| getrocknete Menge: | 3538 | g | T_{Slurry}= | 50 | °C |
| | | | U= | 3,0 | U/min |
| Prozessdauer: | 220 | min | RF= | 0,3 | % |
| Eindüsungsmenge: | 6675 | g | | | |
| Eindüsungsleistung Slurry: | 30,3 | g/min | | | |
| Eindüsungsleistung Slurry: | 1,82 | kg/h | | | |
| **Produktaustrag:** | **0,96** | **kg/h** | | | |
| Tagesleistung [6h]: | 5,79 | kg | | | |

| 2.11 | | | Parameter | | |
|---|---|---|---|---|---|
| Prozessdauer: | 4 h 40 min | h, min | p= | 15 | mbar |
| | | | T_{W}= | 112 | °C |
| Feststoffgehalt: | 53% | | T_{M}= | 50 | °C |
| getrocknete Menge: | 5205 | g | T_{Slurry}= | 50 | °C |
| | | | U= | 3,0 | U/min |
| Prozessdauer: | 280 | min | RF= | 0,3 | % |
| Eindüsungsmenge: | 9821 | g | | | |
| Eindüsungsleistung Slurry: | 35,1 | g/min | | | |
| Eindüsungsleistung Slurry: | 2,10 | kg/h | | | |
| **Produktaustrag:** | **1,12** | **kg/h** | | | |
| Tagesleistung [6h]: | 6,69 | kg | | | |

### Zusammenfassung der Ergebnisse:

| Parameter | Einheit | 2.5 | 2.6 | 2.7 | 2.8 | 2.9 | 2.1 0 | 2.11 |
|---|---|---|---|---|---|---|---|---|
| | | | | | | | | |
| Druck | [mbar] | 15 | 15 | 15 | 15 | 15 | 15 | 15 |
| Walzentemperatur | [°C] | 120 | 120 | 112 | 112 | 112 | 112 | 112 |
| Dauer | [min] | 180 | 330 | 140 | 255 | 355 | 200 | 280 |
| Menge | [g] | 3200 | 5848 | 2609 | 4520 | 640 0 | 353 8 | 5205 |
| **Durchsatz** | **[kg/h]** | **1,1** | **1,1** | **1,1** | **1,1** | **1,1** | **1,1** | **1,1** |

Das Trocknungsgut der Versuchsserien 1 und 2 wurde nach Prozessende mechanisch durch eine Vermahlung nachbehandelt, um gleichförmige rieselfähige Pulver zu erhalten.

Zum Erhalt eines homogenen pulverförmigen Trockengutes wurden die Produktstränge oder
- gardinenartige Formen nach 12 h Abkühlung in Stickstoffatmosphäre einer Vermahlung unterzogen:
   ▪ die Vermahlung wurde in einem EIRICH - Intensivmischer R02 mit einem Füllvolumen von 3 bis 5 Litern und einem Durchmesser von 235 mm durchgeführt. Der Mischer verfügt über eine zweistufige Geschwindigkeitsregulierung und eine gegenläufige Drehbewegung zwischen Rührer und Teller. Die Eindüsung erfolgt über eine Zweistoffdüse (Luft-Flüssigkeit).
   ▪ die Mahldauer betrug jeweils 30 Sekunden
   ▪ die Qualität der Vermahlung des getrockneten Produktes war unabhängig von der Produktform (Gardinenform oder Produktrolle) sehr gut

## Patentansprüche

1. Verfahren zur Herstellung von wasser- und staubfreien Zuckertensidgranulaten, bei dem man eine auf mindestens 40 °C erhitzte wässrige Paste von Alkyl- und/oder Alkenylpolyglykosiden mit einem Feststoffgehalt von 40 - 60 Gew.% in einem Vakuum-Doppelwalzentrockner mit einer spezifischen Trocknungsleistung von 3 bis 7 kg/m²/h bei einer Walzentemperatur von 100 bis 130 °C trocknet.

2. Verfahren nach Anspruch 1, **dadurch gekennzeichnet, dass** man den Trockner bei einem Vakuum von 5 bis 25 mbar Absolutdruck fährt.

3. Verfahren nach den Ansprüchen 1 und/oder 2, **dadurch gekennzeichnet, dass** die Walzen eine Spaltbreite von 0,05 bis 5 mm haben.

4. Verfahren nach mindestens einem der Ansprüche 1 bis 3, **dadurch gekennzeichnet, dass** die Walzenumdrehungszahl bei 1 bis 6 Umdrehungen pro Minute liegt.

5. Verfahren nach mindestens einem der Ansprüche 1 bis 4, **dadurch gekennzeichnet, dass** man Alkylpolyglykoside der Formel **(I)** einsetzt,
**R¹O-[G]**ₚ **(I)**
in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht.

6. Verfahren nach mindestens einem der Ansprüche 1 bis 5, **dadurch gekennzeichnet, dass** man den Doppelwalzentrockner mit einer Walzentemperatur von 105 bis 120°C einsetzt.

7. Verfahren nach mindestens einem der Ansprüche 1 bis 6, **dadurch gekennzeichnet, dass** man den Trocknungsprozess bei einem Absolutdruck (Vakuum) 15 ± 5 mbar, bevorzugt 15 ± 3 mbar fährt.

8. Verfahren nach mindestens einem der Ansprüche 1 bis 7, **dadurch gekennzeichnet, dass** man den Doppelwalzentrockner mit einer Manteltemperatur von 50 ± 5 °C einsetzt.

9. Verfahren nach mindestens einem der Ansprüche 1 bis 8, **dadurch gekennzeichnet, dass** man den Doppelwalzentrockner mit Walzenumdrehung von 1 bis 6 U/min bevorzugt 2 bis 5 U/min, besonders bevorzugt 3 bis 5 U/min einsetzt.

10. Verfahren nach mindestens einem der Ansprüche 1 bis 9, **dadurch gekennzeichnet, dass** man eine Mahlung des erhaltenen getrockneten Produktes anschließt.

11. Zuckertensidgranulat hergestellt nach mindestens einem der vorgenannten Ansprüche, **dadurch gekennzeichnet, dass** die Restfeuchte unter 1,5 bevorzugt unter 1,0 Gew.% liegt.
